# EUROPEAN PATENT APPLICATION

(11) **EP 4 848 815 A1**
(43) Date of publication of application: **02.12.2026**
(21) Application number: 24919248.5
(22) Date of filing: 23.01.2024
(51) Int. Cl.: H04W 36/08

(54) **INFORMATION TRANSMISSION METHOD AND APPARATUS, AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Stöckeler, Ferdinand
(86) International application number: PCT/CN2024/073732
(87) International publication number: WO 2025/156130

(57) **Abstract**

The present disclosure provides an information transmission method and apparatus, and a storage medium. The method comprises: broadcasting a system message, wherein the system message is used for providing new radio non-terrestrial network communication (NR NTN) neighbor cell information, and the NR NTN neighbor cell information is used by a terminal for cell reselection. The present disclosure achieves the objective of reselection from E-UTRAN TN to NR NTN, and improves the availability of NTN communication.

## Description

### TECHNICAL FIELD

The present disclosure relates to the field of communication technologies, and in particular relates to information transmission methods, information transmission devices, and a storage medium.

### BACKGROUND

Currently, the non-terrestrial network (NTN) communication is becoming increasingly widely used as an important supplement to the terrestrial cellular network communication.

### SUMMARY

Embodiments of the present disclosure provide information transmission methods, information transmission devices, and a storage medium, so as to improve the availability of the NTN communication.

According to a first aspect of embodiments of the present disclosure, an information transmission method is provided, which is performed by a terrestrial network device, where the terrestrial network device is an evolved universal mobile telecommunications system (UMTS) terrestrial radio access network terrestrial network (E-UTRAN TN) network device, and the information transmission method includes: broadcasting a system message, where the system message is used to provide information of a new radio non-terrestrial network (NR NTN) neighbor cell, and the information of the NR NTN neighbor cell is used by a terminal to perform a cell reselection.

According to a second aspect of embodiments of the present disclosure, an information transmission method is provided, which is performed by a terminal and includes: receiving a system message broadcast by a terrestrial network device, where the terrestrial network device is an E-UTRAN TN network device, the system message is used to provide information of an NR NTN neighbor cell, and the information of the NR NTN neighbor cell is used by the terminal to perform a cell reselection.

According to a third aspect of embodiments of the present disclosure, a terrestrial network device is provided, where the terrestrial network device is an E-UTRAN TN network device, and the terrestrial network device includes: a transceiver module configured to broadcast a system message, where the system message is used to provide information of an NR NTN neighbor cell, and the information of the NR NTN neighbor cell is used by a terminal to perform a cell reselection.

According to a fourth aspect of embodiments of the present disclosure, a terminal is provided, which includes: a transceiver module configured to receive a system message broadcast by a terrestrial network device, where the terrestrial network device is an E-UTRAN TN network device, the system message is used to provide information of an NR NTN neighbor cell, and the information of the NR NTN neighbor cell is used by the terminal to perform a cell reselection.

According to a fifth aspect of embodiments of the present disclosure, a terrestrial network device is provided, which includes one or more processors, where the one or more processors are configured to perform the information transmission method described in any one of the first aspects.

According to a sixth aspect of embodiments of the present disclosure, a terminal is provided, which includes one or more processors, where the one or more processors are configured to perform the information transmission method described in any one of the second aspects.

According to a seventh aspect of embodiments of the present disclosure, a communication system is provided, which includes a terrestrial network device configured to perform the information transmission method described in any one of the first aspects, and a terminal configured to perform the information transmission method described in any one of the second aspects.

According to an eighth aspect of embodiments of the present disclosure, a storage medium is provided, which has stored therein instructions that, when run on a communication device, cause the communication device to perform the information transmission method in any one of the first aspect or the second aspect.

According to a ninth aspect of embodiments of the present disclosure, a computer program product is provided, which includes a computer program that, when executed by a processor, is configured to implement the information transmission method described in any one of the first aspect or the second aspect.

In the embodiments of the present disclosure, the E-UTRAN TN network device may broadcast the system message to provide the information of the NR NTN neighbor cell. The information of the NR NTN neighbor cell may be used by the terminal to perform the cell reselection, that is, to perform the reselection from an E-UTRAN TN cell to an NR NTN neighbor cell, thereby achieving the purpose of performing the reselection from the E-UTRAN TN to the NR NTN and improving the availability of the NTN communication.

It is to be understood that both the above general description and the following detailed description are illustrative and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principle of the present disclosure.
FIG. 1 is a schematic interactive diagram of the architecture of a communication system provided according to an embodiment of the present disclosure.
FIG. 2 is a schematic interactive diagram of an information transmission method provided according to an embodiment of the present disclosure.
FIG. 3A is a schematic interactive diagram of an information transmission method provided according to an embodiment of the present disclosure.
FIG. 3B is a schematic interactive diagram of an information transmission method provided according to an embodiment of the present disclosure.
FIG. 4A is a schematic block diagram of a terrestrial network device provided according to an embodiment of the present disclosure.
FIG. 4B is a schematic block diagram of a terminal provided according to an embodiment of the present disclosure.
FIG. 5A is a schematic block diagram of a communication device provided according to an embodiment of the present disclosure.
FIG. 5B is a schematic block diagram of a chip provided according to an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of apparatuses and methods consistent with aspects related to the present disclosure as recited in the appended claims.

Embodiments of the present disclosure provide information transmission methods, information transmission devices, and a storage medium.

In a first aspect, embodiments of the present disclosure provide an information transmission method, which is performed by a terrestrial network device, where the terrestrial network device is an E-UTRAN TN network device, and the information transmission method includes: broadcasting a system message, where the system message is used to provide information of an NR NTN neighbor cell, and the information of the NR NTN neighbor cell is used by a terminal to perform a cell reselection.

In the above embodiments, the E-UTRAN TN network device may broadcast the system message to provide the information of the NR NTN neighbor cell. The information of the NR NTN neighbor cell may be used by the terminal to perform the cell reselection, that is, to perform the reselection from an E-UTRAN TN cell to an NR NTN neighbor cell, thereby achieving the purpose of performing the reselection from the E-UTRAN TN to the NR NTN and improving the availability of the NTN communication.

In conjunction with some embodiments of the first aspect, in some embodiments, the information of the NR NTN neighbor cell includes at least one of: satellite ephemeris information, first time information indicating a validity time of satellite ephemeris information, satellite frequency information, an identifier of the NR NTN neighbor cell, a satellite identifier, satellite antenna information, or second time information indicating a time when the NR NTN neighbor cell starts to provide a service.

In the above embodiments, the information of the NR NTN neighbor cell may include, but is not limited to, at least one of the above information, thereby providing the information of the NR NTN neighbor cell via the system message, so as to achieve the purpose of performing the reselection from the E-UTRAN TN to the NR NTN, with high availability.

In conjunction with some embodiments of the first aspect, in some embodiments, the system message includes at least one of: a first system information block (SIB), where the first SIB is used to provide information of a new radio (NR) neighbor cell; a second SIB, where the second SIB is used to provide satellite information of an Internet of Things non-terrestrial network (IoT NTN) neighbor cell; or a third SIB, where the third SIB is used to provide the information of the NR NTN neighbor cell.

In the above embodiments, the existing first SIB or the existing second SIB may be reused, or a new SIB, such as the third SIB, may be used to provide the information of the NR NTN neighbor cell via the system message, so as to achieve the purpose of performing the reselection from the E-UTRAN TN to the NR NTN, with high availability.

In conjunction with some embodiments of the first aspect, in some embodiments, in a case where the system message includes the first SIB, the first SIB includes any one of: satellite information associated with the NR neighbor cell; or frequency information of the NR neighbor cell and satellite identifier information associated with the frequency information of the NR neighbor cell.

In the above embodiments, the first SIB may include a new information element to provide the satellite information associated with the NR neighbor cell, or the existing information element in the first SIB is reused to provide the satellite identifier information associated with the frequency information of the NR neighbor cell while providing the frequency information of the NR neighbor cell. Thus, it is possible to achieve the purpose of providing the information of the NR NTN neighbor cell via the system message, with high availability.

In conjunction with some embodiments of the first aspect, in some embodiments, in a case where the system message includes the second SIB, the second SIB includes any one of: the information of the NR NTN neighbor cell; or information of an IoT NTN neighbor cell, where the information of the IoT NTN neighbor cell includes at least one of: satellite antenna information, or satellite frequency information.

In the above embodiments, the second SIB may include a new information element to provide information of an NR neighbor cell, or the existing information element in the second SIB is reused to provide the satellite information in the information element that provides the information of the IoT NTN neighbor cell. Thus, it is possible to achieve the purpose of providing the information of the NR NTN neighbor cell via the system message, with high availability.

In conjunction with some embodiments of the first aspect, in some embodiments, in a case where the system message includes the third SIB, an update period of the third SIB is different from an update period of the system message.

In the above embodiments, when the system message includes the third SIB, the update period of the newly added third SIB may be different from the update period of the system message. The update period of the third SIB may be determined based on the satellite ephemeris information, which is not limited in the present disclosure. It is easy to implement with high availability.

In conjunction with some embodiments of the first aspect, in some embodiments, in a case where the system message includes the third SIB, a tag value of the system message is independent of whether the third SIB is updated.

In the above embodiments, when the system message includes the third SIB, the change in the tag value of the system message is unrelated to the update of the third SIB. It is easy to implement with high availability.

In conjunction with some embodiments of the first aspect, in some embodiments, in a case where the system message includes the second SIB or the third SIB, and the second SIB or the third SIB includes NR NTN satellite frequency information, the NR NTN satellite frequency information is associated with frequency information of the NR neighbor cell included in the first SIB; or in a case where the system message includes the second SIB or the third SIB, and the second SIB or the third SIB includes NR NTN satellite identifier information, the first SIB includes satellite identifier information associated with frequency information of the NR neighbor cell.

In the above embodiments, when the system message includes the second SIB or the third SIB, the NR NTN satellite frequency information may be associated with the frequency information of the NR neighbor cell included in the first SIB, or the first SIB includes the satellite identifier information associated with the frequency information of the NR neighbor cell. Thus, it is possible to achieve the purpose of providing the information of the NR NTN neighbor cell via the system message, with high availability.

In a second aspect, embodiments of the present disclosure provide an information transmission method, which is performed by a terminal and includes: receiving a system message broadcast by a terrestrial network device, where the terrestrial network device is an E-UTRAN TN network device, the system message is used to provide information of an NR NTN neighbor cell, and the information of the NR NTN neighbor cell is used by the terminal to perform a cell reselection.

In the above embodiments, the terminal may receive the system message broadcast by the terrestrial network device to obtain the information of the NR NTN neighbor cell. The information of the NR NTN neighbor cell may be used by the terminal to perform the cell reselection, that is, to perform the reselection from an E-UTRAN TN cell to an NR NTN neighbor cell, thereby achieving the purpose of performing the reselection from the E-UTRAN TN to the NR NTN and improving the availability of the NTN communication.

In conjunction with some embodiments of the second aspect, in some embodiments, the information of the NR NTN neighbor cell includes at least one of: satellite ephemeris information, first time information indicating a validity time of satellite ephemeris information, satellite frequency information, an identifier of the NR NTN neighbor cell, a satellite identifier, satellite antenna information, or second time information indicating a time when the NR NTN neighbor cell starts to provide a service.

In conjunction with some embodiments of the second aspect, in some embodiments, the system message includes at least one of: a first SIB, where the first SIB is used to provide information of an NR neighbor cell; a second SIB, where the second SIB is used to provide satellite information of an IoT NTN neighbor cell; or a third SIB, where the third SIB is used to provide the information of the NR NTN neighbor cell.

In conjunction with some embodiments of the second aspect, in some embodiments, in a case where the system message includes the first SIB, the first SIB includes any one of: satellite information associated with the NR neighbor cell; or frequency information of the NR neighbor cell and satellite identifier information associated with the frequency information of the NR neighbor cell.

In conjunction with some embodiments of the second aspect, in some embodiments, in a case where the system message includes the second SIB, the second SIB includes any one of: the information of the NR NTN neighbor cell; or information of an IoT NTN neighbor cell, where the information of the IoT NTN neighbor cell includes at least one of: satellite antenna information, or satellite frequency information.

In conjunction with some embodiments of the second aspect, in some embodiments, in a case where the system message includes the third SIB, an update period of the third SIB is different from an update period of the system message.

In conjunction with some embodiments of the second aspect, in some embodiments, in a case where the system message includes the third SIB, a tag value of the system message is independent of whether the third SIB is updated.

In conjunction with some embodiments of the second aspect, in some embodiments, the method further includes: determining that the third SIB is still valid in a case where the tag value of the system message broadcast by the terrestrial network device is different from the tag value of the system message stored in the terminal.

In conjunction with some embodiments of the second aspect, in some embodiments, in a case where the system message includes the second SIB or the third SIB, and the second SIB or the third SIB includes NR NTN satellite frequency information, the NR NTN satellite frequency information is associated with frequency information of the NR neighbor cell included in the first SIB; or in a case where the system message includes the second SIB or the third SIB, and the second SIB or the third SIB includes NR NTN satellite identifier information, the first SIB includes satellite identifier information associated with frequency information of the NR neighbor cell.

In conjunction with some embodiments of the second aspect, in some embodiments, the method further includes: performing a measurement on the NR NTN neighbor cell based on the information of the NR NTN neighbor cell.

In a third aspect, embodiments of the present disclosure provide a terrestrial network device, where the terrestrial network device is an E-UTRAN TN network device, and the terrestrial network device includes: a transceiver module configured to broadcast a system message, where the system message is used to provide information of an NR NTN neighbor cell, and the information of the NR NTN neighbor cell is used by a terminal to perform a cell reselection.

In a fourth aspect, embodiments of the present disclosure provide a terminal, which includes: a transceiver module configured to receive a system message broadcast by a terrestrial network device, where the terrestrial network device is an E-UTRAN TN network device, the system message is used to provide information of an NR NTN neighbor cell, and the information of the NR NTN neighbor cell is used by the terminal to perform a cell reselection.

In a fifth aspect, embodiments of the present disclosure provide a terrestrial network device, which includes one or more processors, where the one or more processors are configured to perform the information transmission method described in any one of the first aspects.

In a sixth aspect, embodiments of the present disclosure provide a terminal, which includes one or more processors, where the one or more processors are configured to perform the information transmission method described in any one of the second aspects.

In a seventh aspect, embodiments of the present disclosure provide a communication system, which includes a terrestrial network device configured to perform the information transmission method described in any one of the first aspects, and a terminal configured to perform the information transmission method described in any one of the second aspects.

In an eighth aspect, embodiments of the present disclosure provide a storage medium, which has stored therein instructions that, when run on a communication device, cause the communication device to perform the information transmission method in any one of the first aspect or the second aspect.

In a ninth aspect, embodiments of the present disclosure provide a computer program product, which includes a computer program that, when executed by a processor, is configured to implement the information transmission method described in any one of the first aspect or the second aspect.

It may be understood that the terminal, the terrestrial network device, the communication system, the storage medium, and the computer program which are mentioned above are all configured to execute the methods provided in the embodiments of the present disclosure. Therefore, regarding the beneficial effects they may achieve, reference may be made to the beneficial effects of the corresponding methods, which will not be elaborated herein.

Embodiments of the present disclosure provide information transmission methods, information transmission devices, and a storage medium. In some embodiments, terms such as an information transmission method, an information processing method, and a communication method may be used interchangeably; terms such as an information transmission device, an information processing device, and a communication device may be used interchangeably; and terms such as an information processing system, and a communication system may be used interchangeably.

The embodiments of the present disclosure are not exhaustive, but are merely illustrative of some embodiments, and are not intended to limit the scope of protection of the present disclosure. Unless there is any contradiction, each step in a particular embodiment may be implemented as an independent embodiment, and the steps may be arbitrarily combined. For example, the solution after removing some steps in a particular embodiment may also be implemented as an independent embodiment, and the order of the steps in a particular embodiment may be arbitrarily interchanged. In addition, optional implementations in a particular embodiment may be arbitrarily combined. Furthermore, the embodiments may be arbitrarily combined. For example, some or all steps in different embodiments may be arbitrarily combined, and a particular embodiment may be arbitrarily combined with optional implementations of other embodiments.

In each embodiment of the present disclosure, unless otherwise specified or contradicted by logic, the terms and/or descriptions between the embodiments are consistent and may be referenced by each other. The technical features in different embodiments may be combined based on their inherent logical relationships to form a new embodiment.

The terms used in the embodiments of the present disclosure are only for the purpose of describing specific embodiments and are not intended to limit the present disclosure.

In the embodiments of the present disclosure, unless otherwise specified, elements expressed in the singular form, such as "a," "an," "the," "above," "said," "above-mentioned," "this," or the like, may mean "one and only one," "one or more," "at least one," or the like. For example, when an article such as "a," "an," and "the" in English in translation is used, the noun following the article may be understood as a singular expression or a plural expression.

In the embodiments of the present disclosure, "a plurality of" refers to two or more.

In some embodiments, terms such as "at least one of," "one or more," "a plurality of," "multiple," and the like may be used interchangeably.

In some embodiments, the descriptions such as "at least one of A or B," "A and/or B," "A in one case, B in another case" or "in response to one case A, in response to another case B" may include the following technical solutions depending on the situations: A is executed in some embodiments (A is executed independently from B); B is executed in some embodiments (B is executed independently from A); A or B is selected for execution in some embodiments (A and B are selectively executed); and A and B are executed in some embodiments (A and B are both executed). The same applies when there are more branches such as A, B, and C.

In some embodiments, the descriptions such as "A or B" may include the following technical solutions depending on the situations: A is executed in some embodiments (A is executed independently from B); B is executed in some embodiments (B is executed independently from A); and A or B is selected for execution in some embodiments (A and B are selectively executed). The same applies when there are more branches such as A, B, and C.

The prefixes such as "first" and "second" in the embodiments of the present disclosure are only used to distinguish different described objects and do not constitute any restrictions on the position, order, priority, quantity or content of the described objects. For the statement of the described objects, reference is made to the description in the context of the claims or embodiments, and no unnecessary restrictions should be constituted due to the use of prefixes. For example, if the described object is a "field", the ordinal numbers preceding the "fields" in a "first field" and a "second field" do not limit the position or order of the "fields". "First" and "second" do not limit whether the "fields" they modify are in the same message, nor do they limit the order of the "first field" and "second field". For another example, if the described object is "level", then the ordinal numbers preceding the "levels" in a "first level" and a "second level" do not restrict the priority between "levels". For another example, the number of the described objects is not limited by ordinal numbers and may be one or more. Taking a "first device" as an example, the number of "devices" may be one or more. In addition, the objects modified by different prefixes may be the same or different. For example, if the described object is a "device", then the "first device" and the "second device" may be the same device or different devices, and the types of the "first device" and the "second device" may be the same or different; for another example, if the described object is "information", then "first information" and "second information" may be the same information or different information, and the contents of the "first information" and the "second information" may be the same or different.

In some embodiments, "including A," "comprising A," "indicating A," and "carrying A" may be interpreted as directly carrying A or indirectly indicating A.

In some embodiments, terms such as "in response to...," "in response to determining...," "in the case of...," "at the time of...," "when...," "if...," "in a case where...," and the like may be used interchangeably.

In some embodiments, apparatuses and devices may be interpreted as being physical or virtual, and their names are not limited to the names described in the embodiments. In some cases, apparatuses and devices may also be understood as "equipments," "devices," "circuits," "network elements," "nodes," "functions," "units," "sections," "systems," "networks," "entities," and "bodies".

In some embodiments, the "network" may be interpreted as devices included in the network, e.g., an access network device, a core network device, or the like.

In some embodiments, the "access network device (AN device)" may also be referred to as "a radio access network device (RAN device)," "a base station (BS)," "a radio base station," or "a fixed station". In some embodiments, the "access network device (AN device)" may also be understood as "a node," "an access point," "a transmission point (TP)," "a reception point (RP)," "a transmission/reception point (TRP)," "a panel," "an antenna panel," "an antenna array," "a cell," "a macro cell," "a small cell," "a femto cell," "a pico cell," "a sector," "a cell group," "a serving cell," "a carrier," "a component carrier," "a bandwidth part (BWP)", or the like.

In some embodiments, the "terminal" or "terminal device" may be referred to as a user equipment (UE), a user terminal, a mobile station (MS), a mobile terminal (MT), a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or the like.

In some embodiments, obtaining data, information, and the like may comply with the laws and regulations of the country where the data, information, and the like are obtained.

In some embodiments, data, information, and the like may be obtained with the consent of the user.

In addition, each element, each row, or each column in the table in the embodiments of the present disclosure may be implemented as an independent embodiment, and the combination of any elements, any rows, and any columns may also be implemented as an independent embodiment.

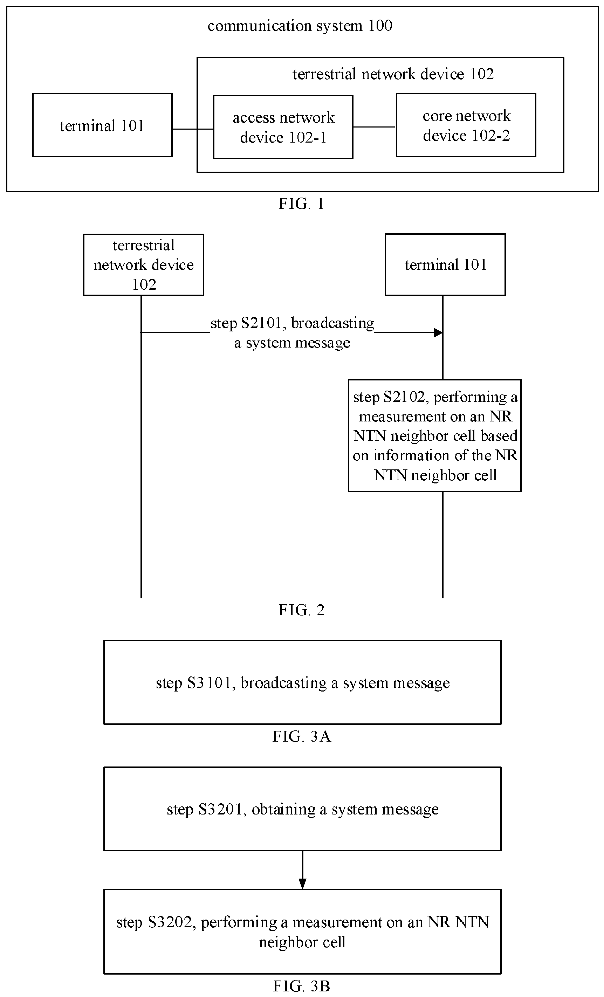

FIG. 1 is a schematic diagram illustrating the architecture of a communication system according to an embodiment of the present disclosure.

As shown in FIG. 1, the communication system 100 includes a terminal 101 and a terrestrial network device 102.

In some embodiments, for example, the terminal 101 includes, but is not limited to, at least one of: a mobile phone, a wearable device, an Internet of Things device, a car with a communication function, a smart car, a tablet computer (Pad), a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in smart grid, a wireless terminal in transportation safety, a wireless terminal in a smart city, or a wireless terminal in a smart home.

In some embodiments, the terrestrial network device 102 is relative to a non-terrestrial network device, and may include an access network device 102-1, for example, a node or device that connects the terminal to a wireless network. The network device may include, but is not limited to, at least one of: an evolved Node B (eNB), a next generation eNB (ng-eNB), a next generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), or a mobile switching center in a 5G communication system; a base station, an open radio access network (Open RAN), or a cloud RAN (Cloud RAN) in a 6G communication system; base stations in other communication systems; or an access node in a wireless fidelity (Wi-Fi) system.

In some embodiments, the technical solutions in the present disclosure may be applied to the Open RAN architecture. In this case, the interfaces between or within access network devices involved in the embodiments of the present disclosure may be transformed into internal interfaces of the Open RAN architecture. The processes and information interactions between these internal interfaces may be implemented by software or programs.

In some embodiments, the access network device 102-1 may be composed of a centralized unit (CU) and a distributed unit (DU), in which the CU may also be referred to as a control unit. The CU-DU structure may be used to split the protocol layers of the access network device, and the functions of some protocol layers are placed in the CU for centralized control, and the functions of some or all of the remaining protocol layers are distributed in the DU, and the DU is centrally controlled by the CU.

In some embodiments, the terrestrial network device 102 includes a core network device 102-2, and the core network device 102-2 may be a single device, or may be multiple devices or a group of devices. The network elements may be virtual or physical. The core network includes, for example, at least one of an evolved packet core (EPC), a 5G core network (5GCN), or a next generation core (NGC). In an embodiment of the present disclosure, the core network device 102-2 may include, but is not limited to, a location management function (LMF).

The terminal 101 may access the core network device 102-2 via the access network device 102-1.

In some embodiments, the communication system 100 may further include a satellite and a network device deployed on the satellite (not shown in FIG. 1). The network device deployed on the satellite may be referred to as a non-terrestrial network device, which may include an access network device and some network elements of a core network, which is not limited in the present disclosure.

It may be understood that the communication system described in the embodiments of the present disclosure is for the purpose of more clearly illustrating the technical solution in the embodiments of the present disclosure, but does not constitute a limitation on the technical solution provided in the embodiments of the present disclosure. Those of ordinary skill in the art may know that with the evolution of the system architecture and the emergence of new service scenarios, the technical solution provided in the embodiments of the present disclosure is also applicable to similar technical problems.

The following embodiments of the present disclosure may be applied to the communication system 100 shown in FIG. 1, or to some entities thereof, but are not limited thereto. The entities shown in FIG. 1 are illustrative. The communication system 100 may include all or some of the entities in FIG. 1, or the communication system may include other entities outside in FIG. 1. The number and form of individual entities are arbitrary. The entities may be physical or virtual. The connection relationship between the entities is illustrative. The entities may not be connected to each other, or may be connected to each other in any way. The connection may be direct or indirect, and may be wired or wireless.

The embodiments of the present disclosure may be applied to long term evolution (LTE) systems, LTE-advanced (LTE-A) systems, LTE-beyond (LTE-B) systems, SUPER 3G systems, international mobile telecommunications-advanced (IMT-Advanced) systems, 4G mobile communication systems, 5G mobile communication systems, 5G new radio (NR) systems, future radio access (FRA) systems, new-radio access technology (RAT) systems, new radio (NR) systems, new radio access (NX) systems, future generation radio access (FX) systems, global system for mobile communications (GSM), CDMA2000, ultra mobile broadband (UMB) systems, IEEE 802.11 (Wi-Fi), IEEE 802.16 (WiMAX), IEEE 802.20, ultra-wideband (UWB), Bluetooth (a registered trademark), public land mobile network (PLMN) networks, systems utilizing other communication methods, next-generation systems built upon them, and the like. In addition, multiple systems may also be combined (for example, a combination of 5G and LTE or LTE-A, or the like) for application.

Technologies related to the IoT NTN and the NR NTN are standardized in the 3rd generation partnership project (3GPP), and the mobility of a terminal between the E-UTRAN TN and the NR NTN is subsequently considered in the terms of the mobility.

The E-UTRAN TN needs to provide satellite information of the NR NTN (from the perspective of the terminal, the NR NTN is a neighbor cell of the terminal), that is, the E-UTRAN TN needs to provide satellite information of an NR NTN neighbor cell, such as satellite ephemeris information, or the like. The terminal may perform a measurement on the NR NTN neighbor cell based on the satellite information of the NR NTN, which is beneficial for the terminal to perform the cell reselection. For example, the terminal may perform the cell reselection from an E-UTRAN TN cell to an NR NTN neighbor cell.

The E-UTRAN TN may provide an NR frequency and information of an NR neighbor cell via a system information block 24 (SIB24) to enable the terminal to perform an inter-radio access technology (inter-RAT) cell reselection.

The IoT NTN may provide satellite information of a neighbor cell (IoT NTN) via an SIB33. The NR NTN may provide satellite information of a neighbor cell (NR NTN) via an SIB19. The NR TN may also send the SIB19 to provide satellite information of a neighbor cell (NR NTN).

In some embodiments, the idle-state terminal mobility may be supported, including the reselection from the E-UTRAN TN to the NR NTN. Therefore, the present disclosure provides the following information transmission method, the following information transmission device, and the following storage medium, which may enable the E-UTRAN TN terrestrial network device to provide the information of the NR NTN neighbor cell via a system message for the purpose of performing the cell reselection by the terminal, thereby improving the availability of the NTN communication.

FIG. 2 is a schematic interactive diagram illustrating an information transmission method according to an embodiment of the present disclosure. As shown in FIG. 2, the embodiments of the present disclosure relate to an information transmission method, which includes the following steps.

At step S2101, the terrestrial network device 102 broadcasts a system message.

In some embodiments, the terrestrial network device 102 is an E-UTRAN TN network device.

In some embodiments, the system message may be used to provide information of an NR NTN neighbor cell. The information of the NR NTN neighbor cell may be used by the terminal 101 to perform the cell reselection.

In some embodiments, the terminal 101 receives the system message within an E-UTRAN TN cell.

In some embodiments, the information of the NR NTN neighbor cell may include, but is not limited to, at least one of: satellite ephemeris information, first time information indicating a validity time of satellite ephemeris information, satellite frequency information, an identifier of the NR NTN neighbor cell, a satellite identifier, satellite antenna information, or second time information indicating a time when the NR NTN neighbor cell starts to provide a service.

In an example, the satellite ephemeris information may be used to describe the operational status or orbital information of a satellite or spacecraft, or the like. Any parameter that may describe the orbital information of the satellite, the operational status of the satellite, or the like may be used as the satellite ephemeris information, which is not limited in the present disclosure.

In an example, the first time information may indicate the validity time of the satellite ephemeris information. For example, the first time information may include, but is not limited to, at least one of an epoch time and a validity duration. The epoch time indicates a starting time point when the satellite ephemeris information becomes effective. The validity duration indicates an effective duration of the satellite ephemeris information.

In an example, the satellite frequency information may indicate the operating frequency band of the satellite.

In an example, the satellite frequency information represents the frequency for the NR NTN network deployed on the satellite.

In an example, the satellite frequency information represents the frequency for an NR NTN cell deployed on the satellite.

In an example, the identifier of the NR NTN neighbor cell may be used to identify the NR NTN neighbor cell provided by the satellite.

In an example, the satellite identifier may be used to identify the satellite.

In an example, the satellite antenna information may include, but is not limited to, polarization information of uplink and downlink antennas of the satellite.

In an example, the second time information may indicate the time when the NR NTN neighbor cell starts to provide a service on a certain geographical area. Certainly, the second time information may also indicate the time when the NR NTN neighbor cell starts to provide a service on a certain geographical area and the time when the NR NTN neighbor cell stops providing the service on the certain geographical area, which is not limited in the present disclosure.

In an example, the second time information may indicate the time when a satellite starts to provide a service on a certain geographical area. For example, if a satellite is deployed with multiple cells, then the time when the satellite starts to provide a service on a certain geographical area indicates the time when the deployed cells start to provide services.

The above is merely an illustrative explanation, and the content of the information of the NR NTN neighbor cell is not limited in the present disclosure.

In some embodiments, the system message may be an SIBn, where n may be a positive integer.

In some embodiments, the system message may be a first SIB, where the first SIB may be used to provide information of an NR neighbor cell. For example, the first SIB may be an SIB24.

In an example, the first SIB includes an NR frequency and the information of the NR neighbor cell.

In an example, in order to enable the first SIB to provide the information of the NR NTN neighbor cell, a new information element (IE) may be added to the first SIB. The newly added IE may be used to provide satellite information associated with the NR neighbor cell, for example, providing a list of satellite information for the NR NTN neighbor cell in the SIB24.

The satellite information associated with the NR neighbor cell may include, but is not limited to, at least one of: satellite ephemeris information, first time information, satellite frequency information, a satellite identifier, satellite antenna information, or second time information. The specific content of the above information has been described in the above embodiments and will not be elaborated herein.

For example, the "association" in the satellite information associated with the NR neighbor cell may be understood as one or more NR NTN neighbor cells being deployed on different frequencies, respectively, and the satellite information corresponding to each NR NTN neighbor cell.

In an example, in order to enable the first SIB to provide the information of the NR NTN neighbor cell, the existing IE in the first SIB may be enhanced. For example, the IE that provides the frequency information of the NR neighbor cell may be enhanced by adding satellite identifier information associated with the frequency information of the NR neighbor cell to the IE. For example, a list of satellite identifiers associated with the frequency information of the NR neighbor cell may be added, so that the terminal 101 may obtain the satellite information of the NR NTN neighbor cell in the SIB33 according to the satellite identifier associated with the frequency information of the NR neighbor cell.

It should be noted that the premise for the terminal 101 to obtain the satellite information of the NR NTN neighbor cell in the SIB33 according to the satellite identifier associated with the frequency information is that the SIB33 includes the satellite information of the NR NTN neighbor cell. Currently, the SIB33 includes satellite information of a neighbor cell (IoT NTN). Therefore, the SIB33 may be enhanced to provide the satellite information of the NR NTN neighbor cell. The scheme by which the SIB33 provides the satellite information of the NR NTN neighbor cell will be described in subsequent embodiments, and will not be described herein.

For example, the "association" in the satellite identifier information associated with the frequency information of the NR neighbor cell may be understood as one or more NR NTN neighbor cells being deployed on a frequency, and the list of satellite identifiers corresponding to the NR NTN neighbor cells.

In some embodiments, the system message may be a second SIB, where the second SIB may be used to provide satellite information of an IoT NTN neighbor cell. For example, the second SIB may be an SIB33.

In an example, the second SIB includes the satellite information of the IoT NTN neighbor cell. The satellite information may include, but is not limited to, at least one of: satellite ephemeris information, first time information, satellite frequency information, a satellite identifier, satellite antenna information, or second time information. The specific content of the above information has been described in the above embodiments and will not be elaborated herein.

In an example, in order to enable the second SIB to provide the information of the NR NTN neighbor cell, a new IE may be added to the second SIB. The newly added IE may be used to provide the information of the NR NTN neighbor cell.

For example, a new IE may be added to the second SIB, and may be NeighSatelliteInfo-r19. The newly added IE may include only the information of the NR NTN neighbor cell, such as an identifier of the NR NTN neighbor cell, a frequency for the NR NTN neighbor cell, or the like.

In an example, in order to enable the second SIB to provide the information of the NR NTN neighbor cell, the existing IE in the second SIB may be enhanced. For example, the IE (NeighSatelliteInfo-r18) that provides the information of the IoT NTN neighbor cell may be enhanced by adding satellite-related information, such as satellite antenna information, satellite frequency information, or the like.

In some embodiments, the system message may be a third SIB, where the third SIB may be a newly added SIB and may be used to provide the information of the NR NTN neighbor cell.

In an example, when the system message includes the third SIB, the update period of the third SIB may be different from the update period of the system message. In other words, the update period of the third SIB is not limited to the update period of the system message, that is, the third SIB may not only be updated during the update period of the system message. For example, the third SIB may be updated based on the satellite ephemeris information.

In an example, when the system message includes the third SIB, the update period of the third SIB may be the same as the update period of the system message. In other words, the update period of the third SIB may be the same as the update period of the existing SIB, i.e., both the update period of the third SIB and the update period of the existing SIB are limited to the update period of the system message. The third SIB may only be updated during the update period of the system message.

In an example, whether the update period of the third SIB is different from the update period of the system message is not limited in the present disclosure.

In an example, when the system message includes the third SIB, the tag value of the system message is independent of whether the third SIB is updated.

Currently, in the case where the tag value of the system message is updated, the terminal 101 should update the system message. However, in an embodiment of the present disclosure, the tag value of the system message broadcast by the terrestrial network device 102 is different from the tag value of the system message stored in the terminal 101. That is, even if the tag value of the system message is updated, the terminal 101 may still consider the third SIB to be valid and there is no need to update the third SIB.

In some embodiments, the system message includes a second SIB (SIB33) or a third SIB (newly added SIB). When the second SIB (SIB33) or the third SIB (newly added SIB) includes NR NTN satellite frequency information, the NR NTN satellite frequency information may be associated with the frequency information of the NR neighbor cell included in the first SIB (SIB24).

The terminal 101 may perform the reselection to an NR NTN cell according to cell reselection parameters for performing the reselection to an NR cell in the first SIB and satellite information of the individual NR NTN neighbor cells deployed on a frequency.

In some embodiments, the system message includes a second SIB (SIB33) or a third SIB (newly added SIB). When the second SIB (SIB33) or the third SIB (newly added SIB) includes NR NTN satellite identifier information, the first SIB (SIB24) includes satellite identifier information associated with the frequency information of the NR neighbor cell.

The terminal 101 may obtain the satellite information of the NR NTN neighbor cell in the third SIB according to the satellite identifier associated with the frequency information of the NR neighbor cell, so as to perform the reselection to an NR NTN cell.

The above is merely an illustrative explanation. Any scheme by which the terrestrial network device broadcasts the system message to provide the information of the NR NTN neighbor cell should fall within the protection scope of the present disclosure.

At step S2102, the terminal 101 performs a measurement on the NR NTN neighbor cell based on the information of the NR NTN neighbor cell.

In some embodiments, the terminal 101 may obtain a first SIB from the terrestrial network device 102. The first SIB may be used to provide information of an NR neighbor cell. For example, the first SIB may be an SIB24. The terminal 101 may obtain the information of the NR NTN neighbor cell from the enhanced SIB24.

In an example, in order to enable the first SIB to provide the information of the NR NTN neighbor cell, a new IE may be added to the first SIB. The newly added IE may be used to provide satellite information associated with the NR neighbor cell, for example, providing a list of satellite information for the NR NTN neighbor cell in the SIB24.

In some embodiments, the terminal 101 may obtain a first SIB and a second SIB from the terrestrial network device 102. The first SIB may be used to provide information of an NR neighbor cell. For example, the first SIB may be an SIB24. The second SIB includes satellite information of the IoT NTN neighbor cell. For example, the second SIB may be an SIB33.

In an example, in order to enable the first SIB to provide the information of the NR NTN neighbor cell, the existing IE in the first SIB may be enhanced. For example, when the second SIB includes NR NTN satellite frequency information, the NR NTN satellite frequency information may be associated with the frequency information of the NR neighbor cell included in the first SIB (SIB24).

The terminal 101 may perform the reselection to an NR NTN cell according to cell reselection parameters for performing the reselection to an NR cell in the first SIB and the satellite information of the NR NTN neighbor cell in the second SIB.

In an example, when the second SIB includes NR NTN satellite identifier information, the first SIB (SIB24) includes satellite identifier information associated with the frequency information of the NR neighbor cell.

The terminal 101 may obtain satellite information corresponding to the satellite identifier of the NR NTN neighbor cell in the second SIB according to the satellite identifier associated with the frequency information of the NR neighbor cell, so as to perform the reselection to an NR NTN cell.

In some embodiments, the terminal 101 may obtain a third SIB from the terrestrial network device 102, where the third SIB directly provides the information of the NR NTN neighbor cell.

For example, the third SIB may also contain some parameters for the UE cell reselection, in addition to providing the information of the NR NTN neighbor cell.

In some embodiments, the terminal 101 may obtain the first SIB and the third SIB from the terrestrial network device 102 to determine the information of the NR NTN neighbor cell.

In an example, when the third SIB (newly added SIB) includes NR NTN satellite frequency information, the NR NTN satellite frequency information may be associated with the frequency information of the NR neighbor cell included in the first SIB (SIB24).

The terminal 101 may perform the reselection to an NR NTN cell according to cell reselection parameters for performing the reselection to an NR cell in the first SIB and satellite information of the individual NR NTN neighbor cells deployed on a frequency.

In an example, when the third SIB (newly added SIB) includes NR NTN satellite identifier information, the first SIB (SIB24) includes satellite identifier information associated with the frequency information of the NR neighbor cell.

The terminal 101 may obtain satellite information of the NR NTN neighbor cell in the third SIB according to the satellite identifier associated with the frequency information of the NR neighbor cell, so as to perform the reselection to an NR NTN cell.

For example, the third SIB may also contain some parameters for the UE cell reselection, in addition to providing the information of the NR NTN neighbor cell.

The above is merely an illustrative explanation. Any scheme by which the terminal 101 determines the information of the NR NTN neighbor cell based on the system message should fall within the protection scope of the present disclosure.

In some embodiments, the terminal 101 may perform a measurement on the NR NTN neighbor cell based on the information of the NR NTN neighbor cell provided in the system message, so as to support the terminal 101 to perform the reselection from an E-UTRAN TN cell to an NR NTN cell.

In some embodiments, the names of information and the like are not limited to the names described in the embodiments. Terms such as "information," "message," "signal," "signaling," "report," "configuration," "indication," "instruction," "command," "channel," "parameter," "domain," "field," "symbol," "code element," "codebook," "codeword," "codepoint," "bit," "data," "program," and "chip" may be used interchangeably.

In some embodiments, terms such as "sending," "emitting," "reporting," "issuing," "transmitting," "bidirectional transmission," and "sending and/or receiving" may be used interchangeably.

In some embodiments, "acquiring," "obtaining," "getting," "receiving," "transmitting," "bidirectional transmission," and "sending and/or receiving" may be used interchangeably, and may be interpreted as receiving from other entities, obtaining from protocols, obtaining from higher layers, obtaining by self-processing, autonomously implementing, or other meanings.

In some embodiments, terms such as "certain," "preset," "predetermined," "set," "indicated," "particular," "any," and "first" may be used interchangeably. "A certain A," "a preset A," "a predetermined A," "a set A," "an indicated A," "a particular A," "any A," and "a first A" may be interpreted as A predefined in a protocol or the like, or as A obtained by setting, configuration, indication or the like, or as a specific A, a certain A, any A, a first A or the like, but are not limited thereto.

In some embodiments, the information transmission method involved in the embodiments of the present disclosure may include at least one of steps S2101 to S2102. For example, step S2101 may be implemented as an independent embodiment, step S2102 may be implemented as an independent embodiment, and steps S2101 + S2102 may be implemented as an independent embodiment, but the information transmission method is not limited thereto.

In some embodiments, step S2101 is optional, and one or more of these steps may be omitted or substituted in different embodiments. For example, when the terminal 101 obtains the system message from other execution entities, step S2101 may not be executed.

In some embodiments, step S2102 is optional, and one or more of these steps may be omitted or substituted in different embodiments. For example, when the neighbor cell measurement conditions are not met, step S2102 may not be executed.

In some embodiments, steps S2101 and S2102 are optional, and one or more of these steps may be omitted or substituted in different embodiments.

In the above embodiments, the E-UTRAN TN network device may broadcast the system message to provide the information of the NR NTN neighbor cell. The information of the NR NTN neighbor cell may be used by the terminal to perform the cell reselection, that is, to perform the reselection from an E-UTRAN TN cell to an NR NTN neighbor cell, thereby achieving the purpose of performing the reselection from a terrestrial network cell to a non-terrestrial cell and improving the availability of the NTN communication.

FIG. 3A is a schematic interactive diagram illustrating an information transmission method according to an embodiment of the present disclosure. As shown in FIG. 3A, the embodiments of the present disclosure relate to an information transmission method, which may be performed by the terrestrial network device 102. The terrestrial network device may be an E-UTRAN TN network device. The information transmission method includes the following step.

At step S3101, a system message is broadcast.

In some embodiments, the system message may be used to provide information of an NR NTN neighbor cell. The information of the NR NTN neighbor cell may be used by the terminal 101 to perform the cell reselection.

In some embodiments, the terminal 101 may receive the system message.

Regarding the optional implementation of step S3101, reference may be made to the optional implementation of step S2101 in FIG. 2 and other related parts in the embodiments involved in FIG. 2, which will not be elaborated herein.

The communication method involved in the embodiments of the present disclosure may include step S3101.

In some embodiments, step S3101 is optional, and one or more of these steps may be omitted or substituted in different embodiments. For example, when the terminal 101 obtains the system message from other execution entities, step S3101 may not be executed.

In the embodiments of the present disclosure, the E-UTRAN TN network device may broadcast the system message to provide the information of the NR NTN neighbor cell. The information of the NR NTN neighbor cell may be used by the terminal to perform the cell reselection, that is, to perform the reselection from an E-UTRAN TN cell to an NR NTN neighbor cell, thereby achieving the purpose of performing the reselection from the E-UTRAN TN to the NR NTN and improving the availability of the NTN communication.

FIG. 3B is a schematic interactive diagram illustrating an information transmission method according to an embodiment of the present disclosure. As shown in FIG. 3B, the embodiments of the present disclosure relate to an information transmission method, which may be performed by the terminal 101. The information transmission method includes the following steps.

At step S3201, a system message is obtained.

In some embodiments, the system message may be used to provide information of an NR NTN neighbor cell. The information of the NR NTN neighbor cell may be used by the terminal 101 to perform the cell reselection.

In some embodiments, the terminal 101 may obtain the system message from the terrestrial network device 102, but is not limited thereto; and the terminal 101 may also receive the system message sent by other entities.

In some embodiments, the terminal 101 may obtain a first SIB from the terrestrial network device 102, where the first SIB may be used to provide information of an NR neighbor cell. For example, the first SIB may be an SIB24. The terminal 101 may obtain the information of the NR NTN neighbor cell from the enhanced SIB24.

In an example, in order to enable the first SIB to provide the information of the NR NTN neighbor cell, a new IE may be added to the first SIB. The newly added IE may be used to provide satellite information associated with the NR neighbor cell, for example, providing a list of satellite information for the NR NTN neighbor cell in the SIB24.

In some embodiments, the terminal 101 may obtain a first SIB and a second SIB from the terrestrial network device 102, where the first SIB may be used to provide information of an NR neighbor cell. For example, the first SIB may be an SIB24. The second SIB includes satellite information of an IoT NTN neighbor cell. The second SIB may be an SIB33.

In an example, in order to enable the first SIB to provide the information of the NR NTN neighbor cell, the existing IE in the first SIB may be enhanced. For example, when the second SIB includes NR NTN satellite frequency information, the NR NTN satellite frequency information may be associated with the frequency information of the NR neighbor cell included in the first SIB (SIB24).

The terminal 101 may perform the reselection to an NR NTN cell according to cell reselection parameters for performing the reselection to an NR cell in the first SIB and satellite information of the NR NTN neighbor cell in the second SIB.

In an example, when the second SIB includes NR NTN satellite identifier information, the first SIB (SIB24) includes satellite identifier information associated with the frequency information of the NR neighbor cell.

The terminal 101 may obtain satellite information corresponding to the satellite identifier of the NR NTN neighbor cell in the second SIB according to the satellite identifier associated with the frequency information of the NR neighbor cell, so as to perform the reselection to an NR NTN cell.

In some embodiments, the terminal 101 may obtain a third SIB from the terrestrial network device 102, where the third SIB directly provides the information of the NR NTN neighbor cell.

For example, the third SIB may also contain some parameters for the UE cell reselection, in addition to providing the information of the NR NTN neighbor cell.

In some embodiments, the terminal 101 may obtain the first SIB and the third SIB from the terrestrial network device 102 to determine the information of the NR NTN neighbor cell.

In an example, when the third SIB (newly added SIB) includes NR NTN satellite frequency information, the NR NTN satellite frequency information may be associated with the frequency information of the NR neighbor cell included in the first SIB (SIB24).

The terminal 101 may perform the reselection to an NR NTN cell according to cell reselection parameters for performing the reselection to an NR cell in the first SIB and satellite information of the individual NR NTN neighbor cells deployed on a frequency.

In an example, when the third SIB (newly added SIB) includes NR NTN satellite identifier information, the first SIB (SIB24) includes satellite identifier information associated with the frequency information of the NR neighbor cell.

The terminal 101 may obtain satellite information of the NR NTN neighbor cell in the third SIB according to the satellite identifier associated with the frequency information of the NR neighbor cell, so as to perform the reselection to an NR NTN cell.

For example, the third SIB may also contain some parameters for the UE cell reselection, in addition to providing the information of the NR NTN neighbor cell.

The above is merely an illustrative explanation. Any scheme by which the terminal 101 determines the information of the NR NTN neighbor cell based on the system message should fall within the protection scope of the present disclosure.

In some embodiments, the terminal 101 obtains the system message determined according to a predefined rule.

In some embodiments, the terminal 101 performs the processing to obtain the system message.

In some embodiments, step S3201 is omitted, and the terminal 101 autonomously implements the function indicated by the system message, or the terminal 101 obtains the system message from other network nodes, or the above function is default or defaulted.

In some embodiments, regarding the optional implementation of step S3201, reference may be made to the optional implementation of step S2101 in FIG. 2 and other related parts in the embodiments involved in FIG. 2, which will not be elaborated herein.

At step S3202, a measurement is performed on the NR NTN neighbor cell.

In some embodiments, the terminal 101 performs the cell reselection based on the measurement.

In some embodiments, regarding the optional implementation of step S3202, reference may be made to the optional implementation of step S2102 in FIG. 2 and other related parts in the embodiments involved in FIG. 2, which will not be elaborated herein.

In some embodiments, the information transmission method involved in the embodiments of the present disclosure may include at least one of steps S3201 to S3202. For example, step S3201 may be implemented as an independent embodiment, step S3202 may be implemented as an independent embodiment, and steps S3201 + S3202 may be implemented as an independent embodiment, but the information transmission method is not limited thereto.

In some embodiments, step S3201 is optional, and one or more of these steps may be omitted or substituted in different embodiments. For example, when the terminal 101 obtains the system message from other execution entities, step S3201 may not be executed.

In some embodiments, step S3202 is optional, and one or more of these steps may be omitted or substituted in different embodiments. For example, when the neighbor cell measurement conditions are not met, step S3202 may not be executed.

In some embodiments, steps S3201 and S3202 are optional, and one or more of these steps may be omitted or substituted in different embodiments.

In the above embodiments, the terminal may perform the measurement on the NR NTN neighbor cell based on the system message broadcast by the terrestrial network device, so as to perform the reselection from an E-UTRAN TN cell to an NR NTN cell, thereby achieving the purpose of performing the reselection from the E-UTRAN TN to the NR NTN and improving the availability of the NTN communication.

The above methods are further illustrated with examples below.

In an embodiment of the present disclosure, the E-UTRAN TN provides satellite information of the NR NTN, including any one of the following items.

1. An SIB24 is enhanced to provide the satellite information of the NR NTN in the SIB24.

2. An SIB33 is enhanced to provide the satellite information of the NR NTN in the SIB33.

3. A new SIB is introduced. Regarding the content of the new SIB, reference is made to satellite information of a neighbor cell in the SIB19.

(1) If a new SIB is introduced, the update of the new SIB is not limited by the update period of the system message and the tag value is not changed.

(2) If a new SIB is introduced or an SIB33 is enhanced, the NR frequency in the SIB24 is associated with the satellite information in the new SIB or the SIB33.

Some embodiments of the present disclosure include the following embodiments and combinations thereof.
1. The E-UTRAN TN provides information of an NR NTN neighbor cell via a system message. The information of the NR NTN neighbor cell is used by a terminal to perform the cell reselection.
2. The information of the NR NTN neighbor cell includes at least one of: satellite ephemeris information; information of a validity time of satellite ephemeris information, such as an epoch time and a validity duration; satellite frequency information; an identifier (ID) of the NR NTN neighbor cell; a satellite ID; satellite antenna information, such as polarization information of an uplink antenna and/or polarization information of a downlink antenna; or information of a time when the NR NTN neighbor cell starts to provide a service.
3. Based on the above, the E-UTRAN TN provides the information of the NR NTN neighbor cell via the system message, including providing the information of the NR NTN neighbor cell via the SIB24.
   For example, a list of satellite information for the neighbor cell may be provided in the SIB24.
4. Satellite ID information is added to the SIB24, for example, a list of satellite IDs is added to the frequency information. The terminal may obtain satellite information of the NR NTN neighbor cell in the SIB33 according to the satellite ID associated with the frequency information.
5. Based on the above, the E-UTRAN TN provides the information of the NR NTN neighbor cell via the system message, including providing the information of the NR NTN neighbor cell via the SIB33.
6. The information of the NR NTN neighbor cell, such as NeighSatelliteInfo-r19, is added to the SIB33.
7. At least one of the following information is added to the information of the neighbor cell in the SIB33: satellite antenna information, or satellite frequency information.
8. Based on the above, the E-UTRAN TN provides the information of the NR NTN neighbor cell via the system message, including defining a new SIB to provide the information of the NR NTN neighbor cell.
9. The update of the new SIB is not limited by the update period of the system message.
10. The update of the new SIB may be performed without changing the tag value.
11. When the tag value broadcast by the terrestrial network device is different from the tag value stored in the terminal, the terminal should not assume that the new SIB is invalid.
12. Based on the above, the frequency information in the SIB24 may be associated with the satellite information of the NR NTN neighbor cell.

For example, by associating the frequency information with the satellite information of the NR NTN neighbor cell, the terminal may determine the satellite information of the NR NTN neighbor cell existing on that frequency according to the frequency information.

For another example, satellite ID information may be added to the SIB24, for example, adding a list of satellite IDs to the frequency information. The terminal may obtain the satellite information of the NR NTN neighbor cell in the SIB33 according to the satellite ID associated with the frequency information.

13. Based on the above, the terminal may perform a measurement on the neighbor cell according to the information of the NR NTN neighbor cell provided by the E-UTRAN TN.

The embodiments of the present disclosure further provide a device for implementing any one of the above methods. For example, a device is provided, which includes units or modules for implementing steps performed by the terrestrial network device (such as an E-UTRAN TN network device) in any one of the above methods. For another example, another device is provided, which includes units or modules for implementing steps performed by the terminal in any one of the above methods.

It should be understood that the division of the units or modules in the above device is only a logical functional division. In actual implementation, the units or modules may be fully or partially integrated into a physical entity, or may be physically separated. Furthermore, the units or modules in the device may be implemented in the form of calling software by a processor, for example, the device includes a processor, the processor is connected to a memory, the memory has stored therein instructions, and the processor calls the instructions stored in the memory to implement any one of the above methods or to implement the functions of the units or modules of the above device. The processor is, for example, a general-purpose processor, such as a central processing unit (CPU) or a microprocessor, and the memory is either internal to the device or external to the device. Alternatively, the units or modules in the device may be implemented in the form of hardware circuits. The functions of some or all of the units or modules may be achieved by designing the hardware circuits. The above-mentioned hardware circuits may be understood as one or more processors. For example, in an implementation, the above-mentioned hardware circuit is an application-specific integrated circuit (ASIC). The functions of some or all of the above-mentioned units or modules are achieved by designing the logical relationships between the components within the circuit. As another example, in another implementation, the above-mentioned hardware circuit may be implemented by a programmable logic device (PLD). Taking a field programmable gate array (FPGA) as an example, it may include a large number of logic gates. The connection relationships between the logic gates are configured via configuration files, thereby achieving the functions of some or all of the above-mentioned units or modules. All units or modules of the above device may be implemented entirely in the form of calling software by the processor, or entirely by hardware circuits, or partially in the form of calling software by the processor and the rest by hardware circuits.

In the embodiments of the present disclosure, the processor is a circuit with signal processing functions. In an implementation, the processor may be a circuit with instruction reading and running functions, such as a CPU, a microprocessor, a graphics processing unit (GPU) (which may be understood as a microprocessor), or a digital signal processor (DSP). In another implementation, the processor may implement certain functions by means of the logical relationship of hardware circuits. The logical relationship of the above-mentioned hardware circuits is fixed or reconfigurable. For example, the processor is a hardware circuit implemented by an ASIC or a PLD, such as an FPGA. In a reconfigurable hardware circuit, the process of loading, by the processor, a configuration document to implement the hardware circuit configuration may be understood as the process of loading, by the processor, instructions to implement the functions of some or all of the above units or modules. In addition, the processor is may also be a hardware circuit designed for artificial intelligence, which may be understood as ASIC, such as a neural network processing unit (NPU), a tensor processing unit (TPU), a deep learning processing unit (DPU), or the like.

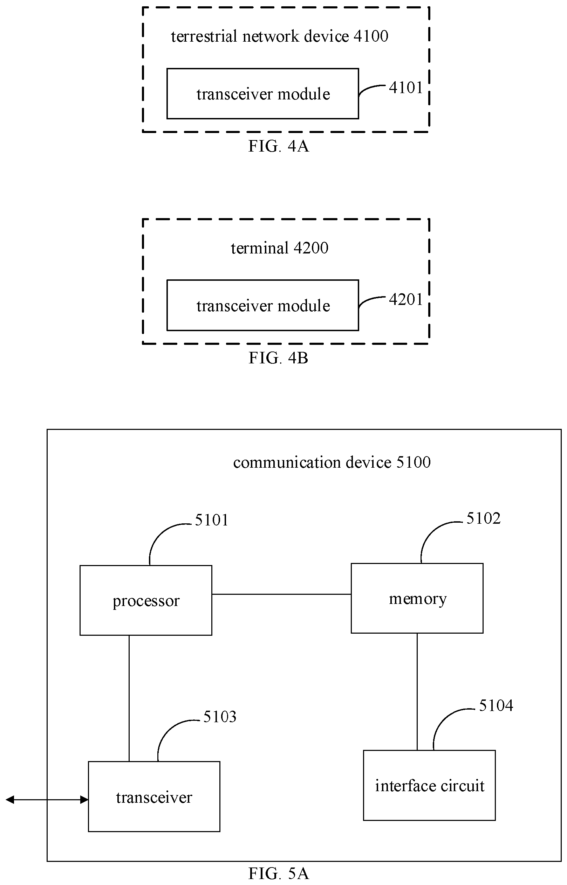

FIG. 4A is a schematic block diagram of a terrestrial network device provided according to an embodiment of the present disclosure. As shown in FIG. 4A, the terrestrial network device 4100 may include a transceiver module 4101.

In some embodiments, the transceiver module 4101 is configured to broadcast a system message, where the system message is used to provide information of an NR NTN neighbor cell, and the information of the NR NTN neighbor cell is used by a terminal to perform a cell reselection.

Optionally, the transceiver module 4101 is configured to perform at least one of the communication steps such as sending and/or receiving steps (for example, but not limited to, step S2101) performed by the terrestrial network device 4100 in any one of the above methods, which will not be elaborated herein.

FIG. 4B is a schematic block diagram of a terminal provided according to an embodiment of the present disclosure. As shown in FIG. 4B, the terminal 4200 may include a transceiver module 4201.

In some embodiments, the transceiver module 4201 is configured to receive a system message broadcast by a terrestrial network device, where the terrestrial network device is an E-UTRAN TN network device, the system message is used to provide information of an NR NTN neighbor cell, and the information of the NR NTN neighbor cell is used by the terminal to perform a cell reselection.

Optionally, the transceiver module 4201 is configured to perform at least one of the communication steps such as sending and/or receiving steps (for example, but not limited to, step S2101) performed by the terminal 4200 in any one of the above methods, which will not be elaborated herein.

Optionally, the terminal 4200 may further include a processing module 4202 (not shown in FIG. 4B), where the processing module 4202 is configured to perform at least one of the other steps (for example, but not limited to, step S2102) performed by the terminal 4200 in any one of the above methods, which will not be elaborated herein.

In some embodiments, the transceiver module may include a sending module and/or a receiving module, and the sending module and the receiving module may be separate or integrated together. Optionally, the transceiver module may be interchanged with the transceiver.

In some embodiments, the processing module may be a single module or may include multiple sub-modules. Optionally, the sub-modules may each execute all or some of the steps to be performed by the processing module. Optionally, the processing module may be interchanged with the processor.

FIG. 5A is a schematic block diagram of a communication device 5100 provided according to an embodiment of the present disclosure. The communication device 5100 may be a terrestrial network device (such as an E-UTRAN TN network device), a chip, chip system, or processor that supports a network device to implement any one of the above methods, or a chip, chip system, or processor that supports a terminal to implement any one of the above methods. The communication device 5100 may be configured to implement the methods as described in the above-mentioned method embodiments. For details, reference may be made to the description in the above-mentioned method embodiments.

As shown in FIG. 5A, the communication device 5100 includes one or more processors 5101. The processor 5101 may be a general-purpose processor, a special-purpose processor, or the like. The processor 5101 may be, for example, a baseband processor or a central processor. The baseband processor may be configured to process a communication protocol and communication data, and the central processor may be configured to control a communication device (such as a base station, a baseband chip, a terminal, a terminal chip, a distributed unit (DU), a centralized unit (CU), or the like), execute a program, and process data of the program. The communication device 5100 is configured to perform any one of the above methods.

In some embodiments, the communication device 5100 further includes one or more memories 5102 for storing instructions. Optionally, all or some of the memories 5102 may be located outside the communication device 5100.

In some embodiments, the communication device 5100 further includes one or more transceivers 5103. When the communication device 5100 includes one or more transceivers 5103, at least one of the communication steps such as sending and/or receiving steps (for example, but not limited to, step S2101) in the above methods is performed by the transceiver 5103, and at least one of the other steps (for example, but not limited to, step S2102) in the above methods is performed by the processor 5101.

In some embodiments, the transceiver may include a receiver and/or a transmitter, and the receiver and the transmitter may be separate or integrated. Optionally, terms such as transceiver, transceiver unit, transceiver device, and transceiver circuit may be used interchangeably; terms such as transmitter, transmitter unit, transmitter device, and transmitter circuit may be used interchangeably; and terms such as receiver, receiver unit, receiver device, and receiver circuit may be used interchangeably.

In some embodiments, the communication device 5100 may include one or more interface circuits 5104. Optionally, the interface circuits 5104 are connected to the memory 5102. The interface circuits 5104 may be configured to receive signals from the memory 5102 or other devices, and may be configured to send signals to the memory 5102 or other devices. For example, the interface circuits 5104 may read instructions stored in the memory 5102 and send the instructions to the processor 5101.

The communication device 5100 described in the above embodiments may be a network device or a terminal, but the scope of the communication device 5100 described in the present disclosure is not limited thereto, and the structure of the communication device 5100 may not be limited to FIG. 5A. The communication device 5100 may be an independent device or part of a larger device. For example, the communication device 5100 may be (1) a stand-alone integrated circuit (IC), or a chip, or a chip system or subsystem; (2) a set of one or more ICs, in which optionally, the set of ICs may further include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

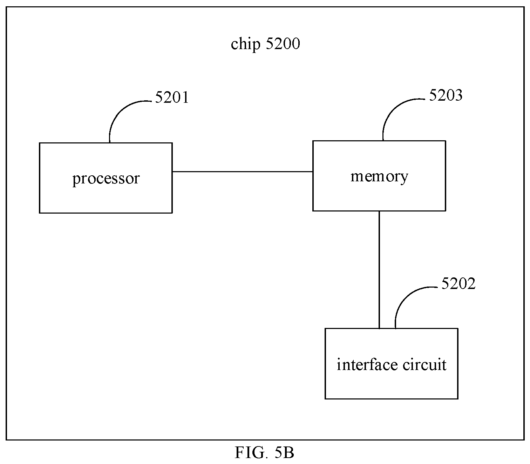

FIG. 5B is a schematic block diagram of a chip 5200 provided according to an embodiment of the present disclosure. For the case where the communication device 5200 may be a chip or a chip system, reference may be made to the block diagram of the chip 5200 shown in FIG. 5B, but the present disclosure is not limited thereto.

The chip 5200 includes one or more processors 5201, and the chip 5200 is configured to perform any one of the above methods.

In some embodiments, the chip 5200 further includes one or more interface circuits 5202. Optionally, the interface circuits 5202 may be configured to receive signals from the memory 5203 or other devices, and may be configured to send signals to the memory 5203 or other devices. For example, the interface circuits 5202 may read instructions stored in the memory 5203 and send the instructions to the processor 5201.

In some embodiments, at least one of the communication steps such as sending and/or receiving steps (for example, but not limited to, step S2101) in the above methods is performed by the interface circuits 5202, and at least one of the other steps (for example, but not limited to, step S2102) in the above methods is performed by the processor 5201.

In some embodiments, terms such as interface circuit, interface, transceiver pin, and transceiver may be used interchangeably.

In some embodiments, the chip 5200 further includes one or more memories 5203 for storing instructions. Optionally, all or some of the memories 5203 may be located outside the chip 5200.

The present disclosure further provides a storage medium, which has stored therein instructions that, when executed on the communication device 5100, cause the communication device 5100 to perform any one of the above methods. Optionally, the above-mentioned storage medium is an electronic storage medium. Optionally, the above-mentioned storage medium is a computer-readable storage medium, but is not limited thereto; and the above-mentioned storage medium may also be a storage medium readable by other devices. Optionally, the above storage medium may be a non-transitory storage medium, but is not limited thereto; and the above-mentioned storage medium may also be a transitory storage medium.

The present disclosure further provides a program product that, when executed by the communication device 5100, causes the communication device 5100 to perform any one of the above methods. Optionally, the above-mentioned program product is a computer program product.

The present disclosure further provides a computer program that, when executed on a computer, causes the computer to perform functions of any one of the above-mentioned method embodiments.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. An information transmission method, performed by a terrestrial network device, wherein the terrestrial network device is an evolved universal mobile telecommunications system (UMTS) terrestrial radio access network terrestrial network (E-UTRAN TN) network device, the information transmission method comprising:
broadcasting a system message, wherein the system message is used to provide information of a new radio non-terrestrial network (NR NTN) neighbor cell, and the information of the NR NTN neighbor cell is used by a terminal to perform a cell reselection.

2. The method according to claim 1, wherein the information of the NR NTN neighbor cell comprises at least one of:
satellite ephemeris information;
first time information indicating a validity time of satellite ephemeris information;
satellite frequency information;
an identifier of the NR NTN neighbor cell;
a satellite identifier;
satellite antenna information; or
second time information indicating a time when the NR NTN neighbor cell starts to provide a service.

3. The method according to claim 1 or 2, wherein the system message comprises at least one of:
a first system information block (SIB), wherein the first SIB is used to provide information of a new radio (NR) neighbor cell;
a second SIB, wherein the second SIB is used to provide satellite information of an Internet of Things non-terrestrial network (IoT NTN) neighbor cell; or
a third SIB, wherein the third SIB is used to provide the information of the NR NTN neighbor cell.

4. The method according to claim 3, wherein in a case where the system message comprises the first SIB, the first SIB comprises any one of:
satellite information associated with the NR neighbor cell; or
frequency information of the NR neighbor cell and satellite identifier information associated with the frequency information of the NR neighbor cell.

5. The method according to claim 3, wherein in a case where the system message comprises the second SIB, the second SIB comprises any one of:
the information of the NR NTN neighbor cell; or
information of an IoT NTN neighbor cell, wherein the information of the IoT NTN neighbor cell comprises at least one of: satellite antenna information, or satellite frequency information.

6. The method according to claim 3, wherein in a case where the system message comprises the third SIB, an update period of the third SIB is different from an update period of the system message.

7. The method according to claim 3 or 6, wherein in a case where the system message comprises the third SIB, a tag value of the system message is independent of whether the third SIB is updated.

8. The method according to any one of claim 3, 6 or 7, wherein
in a case where the system message comprises the second SIB or the third SIB, and the second SIB or the third SIB comprises NR NTN satellite frequency information, the NR NTN satellite frequency information is associated with frequency information of the NR neighbor cell comprised in the first SIB; or
in a case where the system message comprises the second SIB or the third SIB, and the second SIB or the third SIB comprises NR NTN satellite identifier information, the first SIB comprises satellite identifier information associated with frequency information of the NR neighbor cell.

9. An information transmission method, performed by a terminal and comprising:
receiving a system message broadcast by a terrestrial network device, wherein the terrestrial network device is an evolved universal mobile telecommunications system (UMTS) terrestrial radio access network terrestrial network (E-UTRAN TN) network device, the system message is used to provide information of a new radio non-terrestrial network (NR NTN) neighbor cell, and the information of the NR NTN neighbor cell is used by the terminal to perform a cell reselection.

10. The method according to claim 9, wherein the information of the NR NTN neighbor cell comprises at least one of:
satellite ephemeris information;
first time information indicating a validity time of satellite ephemeris information;
satellite frequency information;
an identifier of the NR NTN neighbor cell;
a satellite identifier;
satellite antenna information; or
second time information indicating a time when the NR NTN neighbor cell starts to provide a service.

11. The method according to claim 9 or 10, wherein the system message comprises at least one of:
a first system information block (SIB), wherein the first SIB is used to provide information of a new radio (NR) neighbor cell;
a second SIB, wherein the second SIB is used to provide satellite information of an Internet of Things non-terrestrial network (IoT NTN) neighbor cell; or
a third SIB, wherein the third SIB is used to provide the information of the NR NTN neighbor cell.

12. The method according to claim 11, wherein in a case where the system message comprises the first SIB, the first SIB comprises any one of:
satellite information associated with the NR neighbor cell; or
frequency information of the NR neighbor cell and satellite identifier information associated with the frequency information of the NR neighbor cell.

13. The method according to claim 11, wherein in a case where the system message comprises the second SIB, the second SIB comprises any one of:
the information of the NR NTN neighbor cell; or
information of an IoT NTN neighbor cell, wherein the information of the IoT NTN neighbor cell comprises at least one of: satellite antenna information, or satellite frequency information.

14. The method according to claim 11, wherein in a case where the system message comprises the third SIB, an update period of the third SIB is different from an update period of the system message.

15. The method according to claim 11 or 14, wherein in a case where the system message comprises the third SIB, a tag value of the system message is independent of whether the third SIB is updated.

16. The method according to claim 15, further comprising:
determining that the third SIB is still valid in a case where the tag value of the system message broadcast by the terrestrial network device is different from the tag value of the system message stored in the terminal.

17. The method according to any one of claims 11, or 14 to 16, wherein
in a case where the system message comprises the second SIB or the third SIB, and the second SIB or the third SIB comprises NR NTN satellite frequency information, the NR NTN satellite frequency information is associated with frequency information of the NR neighbor cell comprised in the first SIB; or
in a case where the system message comprises the second SIB or the third SIB, and the second SIB or the third SIB comprises NR NTN satellite identifier information, the first SIB comprises satellite identifier information associated with frequency information of the NR neighbor cell.

18. The method according to any one of claims 9 to 17, further comprising:
performing a measurement on the NR NTN neighbor cell based on the information of the NR NTN neighbor cell.

19. A terrestrial network device, wherein the terrestrial network device is an evolved universal mobile telecommunications system (UMTS) terrestrial radio access network terrestrial network (E-UTRAN TN) network device, the terrestrial network device comprising:
a transceiver module configured to broadcast a system message, wherein the system message is used to provide information of a new radio non-terrestrial network (NR NTN) neighbor cell, and the information of the NR NTN neighbor cell is used by a terminal to perform a cell reselection.

20. A terminal, comprising:
a transceiver module configured to receive a system message broadcast by a terrestrial network device, wherein the terrestrial network device is an evolved universal mobile telecommunications system (UMTS) terrestrial radio access network terrestrial network (E-UTRAN TN) network device, the system message is used to provide information of a new radio non-terrestrial network (NR NTN) neighbor cell, and the information of the NR NTN neighbor cell is used by the terminal to perform a cell reselection.

21. A terrestrial network device, comprising:
one or more processors,
wherein the one or more processors are configured to perform the information transmission method according to any one of claims 1 to 8.

22. A terminal, comprising:
one or more processors,
wherein the one or more processors are configured to perform the information transmission method according to any one of claims 9 to 18.

23. A communication system, comprising:
a terrestrial network device configured to perform the information transmission method according to any one of claims 1 to 8; and
a terminal configured to perform the information transmission method according to any one of claims 9 to 18.

24. A storage medium, having stored therein instructions that, when run on a communication device, cause the communication device to perform the information transmission method according to any one of claims 1 to 8 or any one of claims 9 to 18.

25. A computer program product, comprising a computer program that, when executed by a processor, is configured to implement the information transmission method according to any one of claims 1 to 8 or any one of claims 9 to 18.
